# EUROPÄISCHE PATENTSCHRIFT

(11) **EP 2 765 569 B1**
(45) Veröffentlichungstag und Bekanntmachung des Hinweises auf die Patenterteilung: **24.03.2021**
(21) Anmeldenummer: 14455002.7
(22) Anmeldetag: 03.02.2014
(51) Int. Cl.: G08G 5/00

(54) **Verfahren zur Herstellung und Aufbereitung von sicherheitskritischen Informationen**
Method for production and preparation of security-critical information
Procédé de fabrication et de traitement d'informations critiques pour la sécurité

(30) Priorität: 08.02.2013 AT 501012013
(43) Veröffentlichungstag der Anmeldung: 13.08.2014
(73) Patentinhaber: Frequentis AG, 1100 Wien (AT)
(72) Erfinder: Poiger, Michael, 2440 Moosbrunn (AT)
(74) Vertreter: Wildhack & Jellinek

(56) Entgegenhaltungen:
- EP-A1- 0 978 003
- US-A1- 2010 198 489

## Beschreibung

Verfahren zur Herstellung und Aufbereitung von sicherheitskritischen Informationen Die Erfindung betrifft ein Verfahren zur Darstellung und Aufbereitung von sicherheitskritischer Information für Verkehrsmanagement und Einsatzleitstellen gemäß dem Oberbegriff des Patentanspruchs 1. Weiters betrifft die Erfindung ein Terminal gemäß dem Oberbegriff des Patentanspruchs 10.

Die US 2010/198489 A1 offenbart ein Flugverkehrs-Kontrollsystem mit einem Display, auf dem eine Oberflächenkarte angezeigt werden kann. Auf dieser Oberflächenkarte kann z.B. eine Taxiroute eines Flugzeugs dargestellt werden.

Aufgabe der Erfindung ist es, eine einfache und effiziente Bedienung eines Verkehrsmanagement-Terminals zu ermöglichen und dem jeweiligen Lotsen oder Operator eine Vielzahl unterschiedlicher Informationen von unterschiedlichen Systemen oder Datenquellen gleichzeitig über eine gemeinsame Benutzerschnittstelle zur Verfügung zu stellen. Weiters ist es Aufgabe der Erfindung eine nahtlose Anpassung von neu entwickelten Applikationen an bereits bestehende Applikationen zu ermöglichen, ohne in den grundsätzlichen sicherheitskritischen Ablauf einzugreifen und ohne in die bestehende Hardware einzugreifen.

Die Erfindung löst diese Aufgabe bei einem Verfahren der eingangs genannten Art mit dem kennzeichnenden Merkmal des Patentanspruchs 1. Erfindungsgemäß ist bei einem Verfahren zur Darstellung und Aufbereitung von sicherheitskritischer Information für Verkehrsmanagement und Einsatzleitstellen mit zumindest einem Bildschirm, bei dem ein Verkehrssignal zur Verfügung gestellt wird, wobei das Verkehrssignal insbesondere als Folge von hintereinander aufgenommenen Digitalbildern bereitgestellt wird, und das Verkehrssignal von einer ersten Applikation verarbeitet und auf einem Bildschirm dargestellt wird, wobei die erste Applikation einen vorgegebenen Bildschirmbereich einnimmt, vorgesehen, dass zumindest eine weitere Applikation vorgesehen ist, die eine Benutzerschnittstelle aufweist, die einen mit der ersten Applikation identischen oder überlappenden Bildschirmbereich aufweist oder einnimmt, die weitere Applikation der ersten Applikation überlagert ist, sodass die Benutzerschnittstelle der weiteren Applikation die erste Applikation verdeckt, und dass die weitere Applikation in zumindest einem Bildbereich des von ihr eingenommenen Bildschirmbereichs transparent ausgebildet ist, sodass das jeweilige von der ersten Applikation dargestellte Verkehrssignal dargestellt wird, wobei gegebenenfalls eine graphische Benutzerschnittstelle der ersten Applikation dargestellt wird und bedienbar ist. Auf diese Weise können die für das Verkehrsmanagement erforderlichen Daten einfach dargestellt werden.

Die Erfindung verwendet transparente logische Schichten zur Bildschirmdarstellung für sicherheitskritische Applikationen, beispielsweise in Kontrollzentren für Luftverkehr. Wesentlicher Vorteil ist, dass zusätzliche Funktionalität zur Verfügung gestellt werden kann, ohne dass der den Bildschirm betrachtende Benutzer, beispielsweise ein Flug- oder Schiffslotse oder der Einsatzkoordinator eines Rettungseinsatzes, seinen Blick vom Bildschirm abwenden muss. Hierdurch wird gewährleistet, dass der Benutzer den Bildschirm ständig kontrollieren kann und somit eine wesentlich höhere Sicherheit des überwachten Verkehrs oder Systems besteht.

Im Gegensatz zu bekannten Systemen, die eine Hardware-Überlagerung mittels transparenter Displays arbeiten, die über einem anderen Bildschirm angeordnet sind, kommt die vorliegende Erfindung ausschließlich mit einem Standard-Bildschirm aus, wobei die bestehende Hardware nicht geändert werden muss und die zur Darstellung erforderliche erste Applikation nicht angepasst werden muss.

Darüber hinaus besteht auch die Möglichkeit, dass der Benutzer eine beliebige Anzahl von bereichsweise transparenten Applikationen ablaufen lassen kann, die den jeweiligen Verkehrsinformationen überlagert sind. Solche Applikationen sind beispielsweise Applikationen zur Planung von Routen, Applikationen, mit denen eine Funkverbindung hergestellt und visualisiert werden kann, Applikationen für Notizen sowie zum Informationsaustausch mit anderen Benutzern an anderen Terminals.

Selbstverständlich besteht bei diesem Vorgehen die Möglichkeit die weiteren Applikationen an bereits bekannte Darstellungen anzupassen, um eine reichhaltigere Bildschirmdarstellung und eine engere Integration der einzelnen Applikationen zu erzielen. Bestehende Anwendungen können auf diese Weise sehr einfach zu einer gemeinsamen Gesamtapplikation mit einem verbesserten Layout zusammengesetzt werden, was zu einer erhöhten Übersichtlichkeit gegenüber einer getrennten Darstellung auf mehreren Bildschirmen sowie gegenüber einer nicht überlagerten Darstellung mit mehreren Applikationen, von denen jeweils nur eine sichtbar ist und die anderen Applikationen vollständig überlagert.

Ein weiterer Vorteil dieses Vorgehens ist es, dass die einzelnen Applikationen voneinander getrennt implementiert werden können, sodass die einzelnen Applikationen bis auf die gemeinsame Verwendung des Bildschirms, und gegebenenfalls des Zeigegeräts, nicht miteinander wechselwirken. Insbesondere ist es nicht erforderlich, dass die einzelnen Applikationen gemeinsam erstellt oder kompiliert werden müssen. Die Erfindung ermöglicht es somit auch, die Informationen verschiedener Systeme in einer gemeinsamen Benutzerschnittstelle darzustellen, ohne in einzelne Systeme eingreifen zu müssen oder hierfür bestimmte Schnittstellen vorsehen zu müssen und ohne Änderungen an der Hardware wie z.B. dem Bildschirm vornehmen zu müssen.

Besonders vorteilhaft kann gerade bei sicherheitsrelevanten Applikationen vorgesehen sein, dass die erste Applikation ein von einem Radar erstelltes Radarsignal als Verkehrssignal darstellt und gegebenenfalls laufend aktualisiert.

Eine besonders effiziente Bedienung der weiteren Applikation kann erzielt werden, indem von der weiteren Applikation die einzelnen Radarsignale untersucht werden und Verkehrsmittel, insbesondere Flugzeuge oder Schiffe, im Radarsignal detektiert werden, wobei die jeweilige Position des Verkehrsmittels in Form von dem Verkehrsmittel zugeordneten Koordinaten ermittelt wird, und wobei die Positionen der einzelnen Verkehrsmittel gegebenenfalls in Bezug zum jeweiligen auf Grundlage des Radarsignals erstellten Digitalbilds gesetzt werden, und an den einzelnen ermittelten Positionen der Verkehrsmittel Symbole erstellt werden, die dem Radarsignal überlagert auf dem Bildschirm dargestellt werden oder das Radarsignal ersetzen.

Um einfach einzelne identifizierte Verkehrsmittel auswählen zu können, ohne eine separate Benutzerschnittstelle aktivieren oder bedienen zu müssen, kann vorgesehen sein, dass bei Betätigung eines der Symbole mit dem Zeigegerät eine, dem jeweiligen Symbol oder Verkehrsmittel zugeordnete Zusatzfunktion aufgerufen oder beendet wird, wobei insbesondere eine Kommunikationsverbindung mit dem jeweiligen Verkehrsmittel erstellt oder beendet wird. Hierdurch wird insbesondere vermieden, dass der Lotse oder Operator bei der Anwahl bestimmter Funktionen seinen Blick vom Radar abwendet.

Um eine ständige Beobachtung des Radarbilds während der Bedienung des zu ermöglichen, kann vorgesehen sein, dass die weitere Applikation zusätzlich noch eine Anzahl von mittels eines Zeigegeräts, insbesondere mittels einer Maus oder mittels eines Touchpads, bedienbaren Bedienelementen aufweist, die das jeweilige von der ersten Applikation erstellte Radarsignal überdecken.

Eine besondere Ausführungsform, die eine effiziente Bedienung ermöglicht, sieht vor, dass die zumindest eine weitere Applikationen über Bedienelemente verfügt, die der ersten, gegebenenfalls der weiteren, Applikation überlagert sind und die jeweils transparente Bereiche aufweisen, sodass das von der ersten Applikation dargestellte Verkehrssignal teilweise sichtbar und die erste Applikation bedienbar ist.

Um für mehrere Applikationen einfach ein Layout vorgeben zu können, kann vorgesehen sein, dass zumindest zwei weiteren Applikationen vorhanden sind, dass eine Priorität der Anzeige der Applikationen vorgegeben wird, wobei die erste Applikation die niedrigste Priorität aufweist, und dass der Inhalt einer Applikation an einer bestimmten Bildposition nur dann dargestellt wird, wenn sämtliche Applikationen mit höherer Priorität transparent sind, wobei gegebenenfalls die Priorität der weiteren Applikationen einstellbar ist.

Ein weiterer bevorzugter Aspekt der Erfindung, der eine zufällige Fehlbedienung und eine damit einhergehende Veränderung des Layouts verhindert, sieht vor, dass die erste Applikation und die weiteren Applikationen an einem, insbesondere durch die Position der ersten Applikation, vorgegebenen Bezugspunkt ausgerichtet werden und in ihrer Form, Größe und Position unveränderlich gesetzt werden.

Um eine gegenseitige Beeinflussung der ersten Applikation mit den weiteren Applikationen zu vermeiden, kann vorgesehen sein, dass die erste Applikation mit den weiteren Applikationen nicht in unmittelbarer Datenverbindung steht und mit Ausnahme der Ausführung auf demselben Rechner unter demselben Betriebssystem kein Datenaustausch, insbesondere zumindest nicht hinsichtlich Verkehrsdaten und daraus abgeleiteter Daten, zwischen der ersten Applikation und den weiteren Applikationen durchgeführt wird.

Weiters betrifft die Erfindung ein Terminal zur Darstellung und Aufbereitung von sicherheitskritischer Information für Verkehrsmanagement und Einsatzleitstellen mit zumindest einem Bildschirm, sowie einer Schnittstelle zur Einspeisung eines Verkehrssignals, die das Verkehrssignal insbesondere als Folge von hintereinander aufgenommenen Digitalbildern bereitstellt, wobei auf dem Terminal eine erste Applikation ausführbar abgespeichert ist, die das Verkehrssignal verarbeitet und auf einem Bildschirm darstellt, wobei die erste Applikation einen vorgegebenen Bildschirmbereich einnimmt. Hierbei ist vorgesehen, dass zumindest eine weitere Applikation vorgesehen ist, die eine Benutzerschnittstelle aufweist, die einen mit der ersten Applikation identischen oder überlappenden Bildschirmbereich aufweist oder einnimmt, die weitere Applikation der ersten Applikation überlagert ist, sodass die Benutzerschnittstelle der weiteren Applikation die erste Applikation verdeckt, und dass die weitere Applikation in zumindest einem Bildbereich transparent ausgebildet ist, sodass die jeweiligen von der ersten Applikation dargestellten Verkehrsdaten dargestellt werden, wobei gegebenenfalls eine graphische Benutzerschnittstelle der ersten Applikation dargestellt wird und bedienbar ist. Mit einem solchen Terminal wird die angegebene Aufgabe vorteilhaft gelöst.

Weitere bevorzugte Ausgestaltungen der Erfindung sind in den abhängigen Patentansprüchen angegeben.

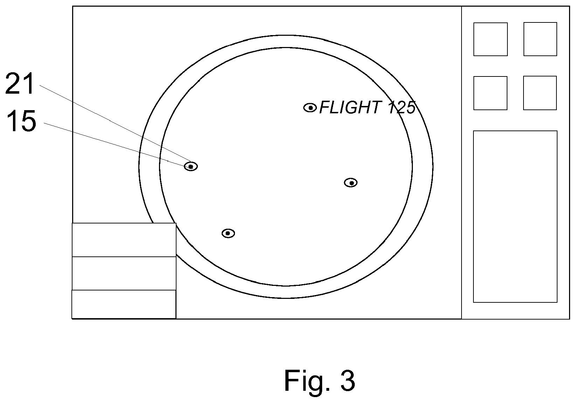

Eine bevorzugte Ausführungsform der Erfindung wird im Folgenden anhand der Zeichnungsfiguren dargestellt. **Fig. 1** zeigt schematisch mehrere Verkehrsmanagement-Terminals in einem Verkehrsmanagement-Netzwerk. **Fig. 2** zeigt die Bildschirmdarstellung dreier einander überlagernder Applikationen, die auf dem Verkehrsmanagement-Terminal ablaufen, in Schichtansicht. **Fig. 3** zeigt die Ausgabe auf dem Bildschirm des Verkehrsmanagement-Terminals.

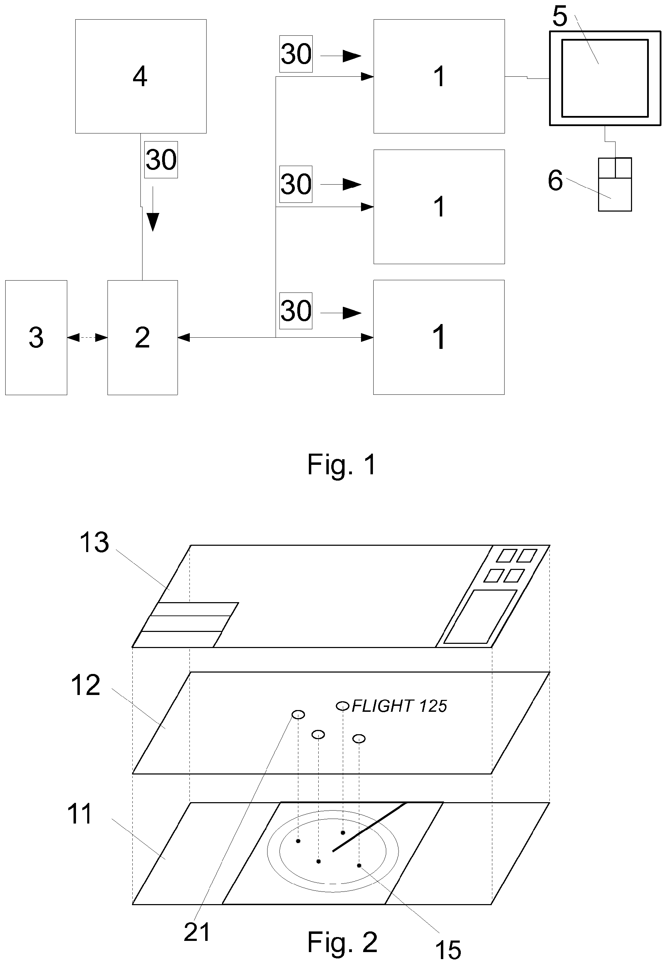

In **Fig. 1** ist ein Verkehrsmanagement-Netzwerk mit einem Verkehrsmanagement-Server 2 dargestellt, mit dem eine Vielzahl von sicherheitskritischen Informationen wie beispielsweise Verkehrsinformationen 30 an eine Anzahl von Verkehrsmanagement-Terminals 1 sowie an eine Vielzahl weiterer Kommunikationsteilnehmer 3 insbesondere in Verkehrsmitteln wie Fahrzeugen, Flugzeugen oder Schiffen, verteilt werden. In dieses Verkehrsmanagement-Netzwerk werden unterschiedliche sicherheitskritische Verkehrsinformationen, beispielsweise Radar-Informationen 30 eingespeist und über einen Verkehrsmanagement-Server 2 auf Anfrage oder mittels Broadcast an die Verkehrsmanagement-Terminals 1 verteilt. Bei den zu verteilenden sicherheitskritischen Verkehrsinformationen 30 handelt es sich beispielsweise um Radardaten, Wetterdaten, Videobilder usw. Diese sicherheitskritischen Verkehrsinformationen 30 werden dem Verkehrsmanagement-Server 2 von externen Einheiten wie beispielsweise Verkehrsmitteln 4, beispielsweise einem Radar oder einer Kamera, zugeführt und den einzelnen Lotsen, die die Verkehrsmanagement-Terminals 1 bedienen, zur Verfügung gestellt.

Die Verkehrsmanagement-Terminals 1 weisen, wie in **Fig. 1** dargestellt, jeweils zumindest einen Bildschirm 5 sowie ein Zeigegerät 6 auf, der im vorliegenden Ausführungsbeispiel als Maus ausgebildet ist, wobei anstelle einer Maus auch ein Track-Ball, ein Zeigestift oder eine Tastatur zur Betätigung von Bedienelementen verwendet werden kann. Alternativ besteht auch die Möglichkeit, dass der Bildschirm 5 und das Zeigegerät 6 durch einen Touchscreen realisiert sind.

Um die sicherheitskritischen Verkehrsinformationen an die Lotsen bzw. an die einzelnen Terminals zur Verfügung zu stellen, läuft auf dem jeweiligen Terminal eine erste Applikation 11 ab, die die vom Server 2 zur Verfügung gestellten Verkehrsinformationen 30 auf dem Bildschirm 5 des jeweiligen Terminals 1 darstellt. Die so zur Verfügung gestellten Verkehrsinformationen 30, insbesondere die Radarinformationen, sind jedoch vielfach nicht ausreichend, um auf einen Blick qualifizierte Entscheidungen treffen zu können. Bei der dargestellten Ausführungsform der Erfindung sind somit noch weitere Applikationen 12, 13 vorgesehen, die ohne Änderung der bestehenden ersten Applikation 11 gleichsam wie zusätzliche teilweise transparente Schichten über die erste Applikation 11 gelegt werden können. Jeder weiteren Applikation 12, 13 ist jeweils eine teilweise durchsichtige Benutzerschnittstelle zugeordnet, die die erste Applikation 11 überlagert und die Bildschirmausgabe der ersten Applikation 11 teilweise verdeckt.

**Fig. 2** zeigt die jeweiligen Benutzerschnittstellen der einzelnen Applikationen 11, 12, 13 in Schichtansicht. In der untersten Schicht befindet sich die erste Applikation 11, die Verkehrsdaten, im vorliegenden Anwendungsfall handelt es sich um Radardaten, darstellt. Dieser ersten Applikation 11 sind zwei weitere Applikationen 12, 13 überlagert.

Bei einer der weiteren Applikationen 12 handelt es sich um eine Darstellungsapplikation 12 für Verkehrsmittel 4, die die einzelnen vom Radar erfassten Verkehrsmittel 4, wie beispielsweise Flugzeuge, mit Zusatzinformationen versehen darstellt und die Anwahl der Verkehrsmittel 4 für bestimmte dem Verkehrsmittel 4 zugeordnete Aktionen wie beispielsweise den Aufbau oder den Abbau einer Funkverbindung ermöglicht.

Bei der anderen weiteren Applikation 13 handelt es sich um eine Bedienapplikation 13, die eine Anzahl von Bedienelementen zur Handhabung von Flugstreifen aufweist.

Sowohl die erste Applikation 11 als auch die beiden weiteren Applikationen 12, 13 nehmen auf dem Bildschirm 5 denselben Platz ein und weisen einander überlagernde Benutzerschnittstellen auf. Prinzipiell ist es jedoch ausreichend, wenn die Applikationen einander überlappende Bildschirmbereiche einnehmen. Zwischen den einzelnen Applikationen 11, 12, 13 wird eine Priorisierung oder Schichtung vorgegeben, wobei ein Bereich einer Applikation 11, 12, 13 mit einer bestimmten Priorität oder in einer bestimmten Schicht jeweils nur dann sichtbar ist, wenn die Applikationen 11, 12, 13 mit höherer Priorität, d.h. in einer darüberliegenden Schicht, in diesem Bereich transparent sind. Die unterste bzw. am niedrigsten priorisierte Schicht ist vorteilhafterweise nicht transparent. Der ersten Applikation 11 wird vorteilhafterweise die niedrigste Priorität bzw. die unterste Schicht zugeordnet. Sie ist nur in denjenigen Bereichen für den Lotsen sichtbar, in denen sämtliche anderen Applikationen 12, 13 transparent sind. Zwischen den weiteren Applikationen 12, 13 kann die Priorisierung entweder nach den Wünschen des jeweiligen Benutzers variierbar oder vorab festgelegt sein. Im ersten Fall kann der jeweilige Benutzer nach seinen Bedürfnissen einstellen, ob und welche der weiteren Applikationen 12, 13 andere weitere Applikationen 12, 13 überlappen. Im vorliegenden Ausführungsbeispiel weist die erste Applikation 11, mit der das Radarbild dargestellt wird, die Priorität bzw. Schicht 1, die Darstellungsapplikation 12 die Priorität bzw. Schicht 2 und die Bedienapplikation 13 die Priorität bzw. Schicht 3 auf.

Durch diese Priorisierung wird vermieden, dass es erforderlich ist, einzelne Applikationen 11, 12, 13 durch konkrete Anwahl zu fokussieren und in den Vordergrund zu rufen. Hierdurch können auch Bedienungsfehler vermieden werden, die mit dem Ansprechverhalten von Applikationen 11, 12, 13 beim Fokussieren zusammenhängen. Eine Fokussierung kann im Rahmen der einander überlagerten Applikationen 11, 12, 13 dadurch erfolgen, dass die sichtbaren Teile der Benutzerschnittstelle der jeweiligen Applikation 11, 12, 13 angewählt wird. Hierdurch ergibt sich vorteilhafterweise - anders als bei konventionellen Anwendungen - kein Wechsel der der Priorisierung der Applikationen 11, 12, 13, d.h. die angewählte Applikation 11, 12, 13 gelangt nicht in den Vordergrund sondern bleibt weiterhin teilweise von höher priorisierten Applikationen 11, 12, 13 verdeckt.

Die erste Applikation 11 sowie die weiteren Applikationen 12, 13 weisen in dieser bevorzugten Ausführungsform der Erfindung eine vom Benutzer nicht veränderbare Position und Größe auf, um eine korrekte Überlappung und Überlagerung der einzelnen Applikationen 11, 12, 13 sicherzustellen. Hierzu kann es auch von Vorteil sein, wenn typische Bedienfunktionen wie beispielsweise bestimmte Bedienflächen zum Minimieren, Maximieren und Schließen von Applikationen deaktiviert, überdeckt oder nicht dargestellt werden. Jede der weiteren Applikationen 12, 13 kann mit zusätzlichen weiteren Funktionen und Merkmalen ausgestattet werden.

Bei der hier dargestellten Ausführungsform der Erfindung ist die weitere Applikation 12 als Darstellungsapplikation 12 abgebildet, die diejenigen Radardaten zugeführt erhält, die auch der ersten Applikation 11 zugeführt werden. Die einzelnen Radarsignale 30 werden untersucht und die Positionen von Verkehrsmitteln 4 wie Flugzeugen oder Schiffen werden im Radarsignal 30 erkannt. Die Position der Verkehrsmittel 4 wird in Form von Koordinaten ermittelt und zur Verfügung gehalten. Um eine nahtlose Integration dieser Darstellungsapplikation 12 mit der die Radarbilder darstellenden ersten Applikation 11 zu ermöglichen, werden die ermittelten Positionen der Verkehrsmittel 4 zum jeweiligen Digitalbild in Bezug gesetzt. An den einzelnen ermittelten Positionen der Verkehrsmittel 4 werden Symbole 21 erstellt und dargestellt, die dem Radarsignal überlagert werden und auf dem Bildschirm 5 dargestellt werden. Diese ersetzen aufgrund der Überlagerung diejenigen Bereiche des Radarsignals 30 der ersten Applikation 11.

Die Symbole 21 werden im vorliegenden Fall auch als Schaltflächen verwendet, mit denen es beispielsweise möglich ist, eine Kommunikation mit den einzelnen Verkehrsmitteln 4 aufzubauen und wieder zu beenden. Auch können die einzelnen Verkehrsmittel 4 zu bestimmten Gruppen zusammengefasst werden oder auch mit bestimmten Informationen versehen werden, die wiederum den anderen Verkehrsteilnehmern oder anderen Fluglotsen zur Verfügung gestellt werden.

Benutzerinteraktionen, die einen bestimmten Bildschirmbereich betreffen, werden jeweils an diejenige Applikation 11, 12, 13 weitergeleitet, die unter den im jeweiligen Bildschirmbereich nicht transparenten Applikationen 11, 12, 13 die höchste Priorität aufweisen. Ein manueller Wechsel der Applikation 11, 12, 13 braucht somit nicht vorgenommen zu werden, da jedem angewählten Bildschirmbereich eine Applikation 11, 12, 13 zugewiesen ist. Es ist somit für den Operator oder Lotsen möglich, quasi durch den transparenten Bereich einer weiteren Applikation 12, 13 hindurch eine darunter liegende erste oder weitere Applikation 11, 12, 13 zu bedienen. Es ist in diesem Zusammenhang jedoch möglich, dass eine weitere Applikation 12, 13 in einem transparenten Bereich bedienbar bleibt.

Im vorliegenden Fall sind auch die einzelnen den Verkehrsmitteln 4 zugeordneten Symbole 21 der Darstellungsapplikation 12 Kreise, die in ihrem Inneren transparent sind, um die von den Verkehrsmitteln 4 herrührenden Radarsignale 15 nicht zu verdecken. Soll jewielige Verkehrsmittel 4 mit der Darstellungsapplikation 12 ausgewählt werden, um eine Kommunikation mit diesem aufzubauen, so kann die Darstellungsapplikation 12 auch eine Benutzerinteraktion in einem transparenten Bereich, hier der Innenbereich des Kreises, behandeln und nicht an die darunterliegende erste Applikation 11 weitergeben.

Ein solches Vorgehen kann etwa auch dann von Vorteil sein, wenn Text auf transparentem Hintergrund geschrieben wird und wenn gewährleistet werden soll, dass eine Benutzereingabe im transparenten Umgebungsbereich, etwa innerhalb eines rechteckigen Bereichs um den Text, von der weiteren Applikation 12, 13 selbst weiter verarbeitet werden soll und nicht an die darunterliegenden Applikationen 11, 12 weitergeleitet werden soll.

Besonders vorteilhaft am dargestellten Vorgehen ist, dass die erste Anwendung 11, und gegebenenfalls auch weitere Anwendungen 12, 13, nicht notwendigerweise vom selben Hersteller stammen müssen, es braucht nicht einmal eine bestimmte Software-Schnittstelle zur Interaktion vorgesehen werden, sodass hier eine sehr lose Interaktion zwischen einer bereits im System verfügbaren ersten Applikation 11 und mehreren weiteren nachträglich erstellten weiteren Applikationen 12, 13 ermöglicht wird. Insbesondere kann auf diese Weise auch eine schädliche Einwirkung durch die fehlerhafte Ansteuerung einer Software-Schnittstelle durch eine nachträglich erstellte weitere Applikation 12, 13 vermieden werden. Weiters ist hierbei von besonderem Vorteil, dass die erste Applikation 11 nicht modifiziert werden muss und auch sonst in den Arbeitsplatz des Operators bzw. Lotsen nicht eingegriffen werden braucht und der Lotse somit sein gewohntes Arbeitsumfeld behält. Die Applikationen 11, 12, 13 können auch unabhängig voneinander gestartet oder geschlossen werden. Darüber hinaus besteht bei der Realisierung der Applikationen 11, 12, 13 keine Notwendigkeit der graphischen Manipulation bzw. Veränderung anderer Applikationen 11, 12, 13 oder einer graphischen Nachbearbeitung einer verwendeten Applikation 11, 12, 13 durch eine andere Applikation 11, 12, 13.

Jeder der Applikationen 11, 12, 13 kann vor ihrer Ausführung eine Priorität und eine Position zugewiesen werden, um im Zusammenspiel mit den übrigen Applikationen 11, 12, 13 ein bestimmtes Erscheinungsbild bzw. Layout zu erreichen. Vorteilhafterweise sorgt ein Kontrollprogramm dafür, dass die Überlagerung der Applikationen 11, 12, 13 gemäß der vorgegebenen Priorisierung eingehalten wird. Dieses Kontrollprogramm sorgt gleichzeitig auch dafür, dass die einzelnen Applikationen zueinander in einer vorgegebenen Weise positioniert werden, sodass das gewünschte Layout der Benutzerschnittstellen der Applikationen 11, 12, 13 erzielt wird. Dieses Kontrollprogramm sorgt auch dafür, dass unerwünschte und mit diesem Layout nicht vereinbare graphische Ausgestaltungen, wie etwa Rahmen, Header-Leisten, usw., nicht dargestellt oder überlagert werden. Zudem kann das Kontrollprogramm auch verhindern, dass Funktionen, wie beispielsweise etwa das Minimieren oder Maximieren der ersten Applikation 11 oder einer weiteren Applikation 12, 13 zur Verfügung gestellt werden. Diese Priorisierung, Positionierung und Deaktivierung bestimmter Funktionen kann durch das Kontrollprogramm vorteilhafterweise automatisch ausgeführt werden und dem Lotsen oder Operator verborgen bleiben.

Das genannte Vorgehen lässt sich insbesondere auf bestehenden Computersystemen mit Standard-Betriebssystemen wie Windows, Linux oder MacOS realisieren und benötigt für die Durchführung keinerlei spezielle Hardware-Unterstützung.

## Patentansprüche

1. Verfahren zur Darstellung und Aufbereitung von sicherheitskritischer Information für Verkehrsmanagement und Einsatzleitstellen mit zumindest einem Bildschirm (5), bei dem
a) ein Verkehrssignal (30) zur Verfügung gestellt wird, wobei das Verkehrssignal (30) als Folge von hintereinander aufgenommenen Digitalbildern bereitgestellt wird, und
b) das Verkehrssignal (30) von einer ersten Applikation (11) verarbeitet und auf einem Bildschirm (5) dargestellt wird, wobei die erste Applikation (11) einen vorgegebenen Bildschirmbereich einnimmt,
c) zumindest eine weitere Applikation (12, 13) vorgesehen ist, die eine Benutzerschnittstelle aufweist, die einen mit der ersten Applikation (11) identischen oder überlappenden Bildschirmbereich aufweist oder einnimmt, und
d) die weitere Applikation (12, 13) der ersten Applikation (11) überlagert ist, sodass die Benutzerschnittstelle der weiteren Applikation (12, 13) die erste Applikation (11) verdeckt, **dadurch gekennzeichnet, dass**
e) die weitere Applikation (12, 13) in zumindest einem Bildbereich des von ihr eingenommenen Bildschirmbereichs transparent ausgebildet ist, sodass das jeweilige von der ersten Applikation (11) dargestellte Verkehrssignal (30) dargestellt wird, wobei eine graphische Benutzerschnittstelle der ersten Applikation (11) dargestellt wird und bedienbar ist.

2. Verfahren nach Anspruch 1, **dadurch gekennzeichnet, dass**
- die erste Applikation (11) ein von einem Radar erstelltes Radarsignal (30) als Verkehrssignal darstellt und gegebenenfalls laufend aktualisiert.

3. Verfahren nach Anspruch 2, **dadurch gekennzeichnet, dass** von der weiteren Applikation (12)
- die einzelnen Radarsignale (30) untersucht werden und Verkehrsmittel (4), insbesondere Flugzeuge oder Schiffe, im Radarsignal (30) detektiert werden, wobei die jeweilige Position des Verkehrsmittels (4) in Form von dem Verkehrsmittel (4) zugeordneten Koordinaten ermittelt wird, und wobei die Positionen der einzelnen Verkehrsmittel (4) gegebenenfalls in Bezug zum jeweiligen auf Grundlage des Radarsignals (30) erstellten Digitalbilds gesetzt werden, und
- an den einzelnen ermittelten Positionen der Verkehrsmittel (4) Symbole (21) erstellt werden, die dem Radarsignal (30) überlagert auf dem Bildschirm (5) dargestellt werden oder das Radarsignal ersetzen.

4. Verfahren nach Anspruch 3, **dadurch gekennzeichnet, dass** bei Betätigung eines der Symbole mit dem Zeigegerät (6) eine, dem jeweiligen Symbol (21) oder Verkehrsmittel (4) zugeordnete Zusatzfunktion aufgerufen oder beendet wird, wobei insbesondere eine Kommunikationsverbindung mit dem jeweiligen Verkehrsmittel (4) erstellt oder beendet wird.

5. Verfahren nach einem der vorangehenden Ansprüche, **dadurch gekennzeichnet, dass** die weitere Applikation (12, 13) zusätzlich noch eine Anzahl von mittels eines Zeigegeräts (6), insbesondere mittels einer Maus oder mittels eines Touchpads, bedienbaren Bedienelementen aufweist, die das jeweilige von der ersten Applikation (11) erstellte Radarsignal überdecken.

6. Verfahren nach einem der vorangehenden Ansprüche, **dadurch gekennzeichnet**, die zumindest eine weitere Applikation (12, 13) über Bedienelemente verfügt, die der ersten, gegebenenfalls der weiteren, Applikation (11, 12, 13) überlagert sind und die jeweils transparente Bereiche aufweisen, sodass das von der ersten Applikation (11) dargestellte Verkehrssignal (30) teilweise sichtbar und die erste Applikation (11) bedienbar ist.

7. Verfahren nach einem der vorangehenden Ansprüche, **dadurch gekennzeichnet,**
- **dass** zumindest zwei weiteren Applikationen (12, 13) vorhanden sind,
- **dass** eine Priorität der Anzeige der Applikationen (11, 12, 13) vorgegeben wird, wobei die erste Applikation (11) die niedrigste Priorität aufweist, und
- **dass** der Inhalt einer Applikation (11, 12, 13) an einer bestimmten Bildposition nur dann dargestellt wird, wenn sämtliche Applikationen (11, 12, 13) mit höherer Priorität transparent sind,
- wobei gegebenenfalls die Priorität der weiteren Applikationen (12, 13) einstellbar ist.

8. Verfahren nach einem der vorangehenden Ansprüche, **dadurch gekennzeichnet, dass** die erste Applikation (11) und die weiteren Applikationen (12, 13) an einem, insbesondere durch die Position der ersten Applikation (11), vorgegebenen Bezugspunkt ausgerichtet werden und in ihrer Form, Größe und Position unveränderlich gesetzt werden.

9. Verfahren nach einem der vorangehenden Ansprüche, **dadurch gekennzeichnet, dass** die erste Applikation (11) mit den weiteren Applikationen (12, 13) nicht in unmittelbarer Datenverbindung steht und mit Ausnahme der Ausführung auf demselben Rechner unter demselben Betriebssystem kein Datenaustausch, insbesondere zumindest nicht hinsichtlich Verkehrsdaten und daraus abgeleiteter Daten, zwischen der ersten Applikation (11) und den weiteren Applikationen (12, 13) durchgeführt wird.

10. Verkehrsmanagement-Terminal (1) zur Darstellung und Aufbereitung von sicherheitskritischer Information für Verkehrsmanagement und Einsatzleitstellen mit zumindest einem Bildschirm (5), sowie
a) einer Schnittstelle zur Einspeisung eines Verkehrssignals (30), die das Verkehrssignal (30) insbesondere als Folge von hintereinander aufgenommenen Digitalbildern bereitstellt, wobei
b) auf dem Terminal (1) eine erste Applikation (11) ausführbar abgespeichert ist, die das Verkehrssignal (30) verarbeitet und auf einem Bildschirm (5) darstellt, wobei die erste Applikation (11) einen vorgegebenen Bildschirmbereich einnimmt,
c) zumindest eine weitere Applikation (12, 13) vorgesehen ist, die eine Benutzerschnittstelle aufweist, die einen mit der ersten Applikation (11) identischen oder überlappenden Bildschirmbereich aufweist oder einnimmt,
d) die weitere Applikation (12, 13) der ersten Applikation (11) überlagert ist, sodass die Benutzerschnittstelle der weiteren Applikation (12, 13) die erste Applikation (11) verdeckt, **dadurch gekennzeichnet, dass**
e) die weitere Applikation (12, 13) in zumindest einem Bildbereich des von ihr eingenommenen Bildschirmbereichs transparent ausgebildet ist, sodass das jeweilige von der ersten Applikation (11) dargestellte Verkehrssignal (30) dargestellt wird, wobei eine graphische Benutzerschnittstelle der ersten Applikation (11) dargestellt wird und bedienbar ist.

11. Terminal nach Anspruch 10, **dadurch gekennzeichnet, dass** die erste Applikation (11) ein von einem Radar erstelltes Radarsignal (30) als Verkehrssignal darstellt und gegebenenfalls laufend aktualisiert.

12. Terminal nach Anspruch 11, **dadurch gekennzeichnet,**
**dass** die weiteren Applikation (12)
- die einzelnen Radarsignale (30) untersucht und Verkehrsmittel (4), insbesondere Flugzeuge oder Schiffe, im Radarsignal (30) detektiert, wobei die weitere Applikation (12) die jeweilige Position des Verkehrsmittels (4) in Form von dem Verkehrsmittel (4) zugeordneten Koordinaten ermittelt und die Positionen der einzelnen Verkehrsmittel (4) gegebenenfalls in Bezug zum jeweiligen auf Grundlage des Radarsignals (30) erstellten Digitalbilds setzt, und
- wobei die weitere Applikation (12) an den einzelnen ermittelten Positionen der Verkehrsmittel (4) Symbole (21) erstellt, diese dem Radarsignal (30) überlagert auf dem Bildschirm (5) darstellt und somit das Radarsignal überschreibt oder überlagert.

13. Terminal nach einem der Ansprüche 10 bis 12, **gekennzeichnet durch** ein Zeigegerät (6), das insbesondere durch eine Maus oder ein Touchpad realisiert ist, wobei die Benutzerschnittstellen der Applikationen (11, 12, 13) Bedienelemente aufweisen, die mit dem Zeigegerät betätigbar sind.

14. Terminal nach einem Ansprüche 10 bis 13, **dadurch gekennzeichnet**, die zumindest eine weitere Applikation (12, 13) über Bedienelemente verfügt, die der ersten, gegebenenfalls der weiteren, Applikation (11, 12, 13) überlagert sind und die jeweils transparente Bereiche aufweisen, sodass das von der ersten Applikation (11) dargestellte Verkehrssignal (30) teilweise sichtbar und die erste Applikation (11) bedienbar ist.

15. Terminal nach einem der Ansprüche 10 bis 14, **dadurch gekennzeichnet,**
- **dass** zumindest zwei weiteren Applikationen (12, 13) vorhanden sind,
- **dass** eine Priorität der Anzeige der Applikationen (11, 12, 13) vorgegeben wird, wobei die erste Applikation (11) die niedrigste Priorität aufweist, und
- **dass** der Inhalt einer Applikation (11, 12, 13) an einer bestimmten Bildposition nur dann dargestellt wird, wenn sämtliche Applikationen (11, 12, 13) mit höherer Priorität transparent sind,
- wobei gegebenenfalls die Priorität der weiteren Applikationen (12, 13) einstellbar ist.

16. Terminal nach einem der Ansprüche 10 bis 15, **dadurch gekennzeichnet, dass** die erste Applikation (11) und die weiteren Applikationen (12, 13) an einem, insbesondere durch die Position der ersten Applikation (11), vorgegebenen Bezugspunkt ausgerichtet und in ihrer Form, Größe und Position unveränderlich sind.

17. Terminal nach einem der Ansprüche 10 bis 16, **dadurch gekennzeichnet, dass** die erste Applikation (11) mit den weiteren Applikationen (12, 13) nicht in unmittelbarer Datenverbindung steht und mit Ausnahme der Ausführung auf demselben Rechner unter demselben Betriebssystem kein Datenaustausch, insbesondere zumindest nicht hinsichtlich Verkehrsdaten und daraus abgeleiteter Daten, zwischen der ersten Applikation (11) und den weiteren Applikationen (12, 13) besteht.

18. Datenträger, auf dem ein Programm zur Durchführung eines Verfahrens gemäß einem der Patentansprüche 1 bis 9 abgespeichert ist.

## Claims

1. Method for displaying and processing safety-critical information for traffic management and control centres with at least one screen (5), in which
a) a traffic signal (30) is provided, wherein the traffic signal (30) is provided as a sequence of successively recorded digital images, and
b) the traffic signal (30) is processed by a first application (11) and displayed on a screen (5), wherein the first application (11) occupies a predetermined screen area,
c) at least one further application (12, 13) is provided which has a user interface that has or occupies a screen area that is identical to or overlaps with the first application (11), and
d) the further application (12, 13) is superimposed on the first application (11), such that the user interface of the further application (12, 13) covers the first application (11),
**characterised in that**
e) the further application (12, 13) is designed to be transparent in at least one image area of the screen area it occupies, such that the respective traffic signal (30) displayed by the first application (11) is displayed, wherein a graphical user interface of the first application (11) is displayed and can be operated.

2. Method according to claim 1, **characterised in that**
- the first application (11) displays and optionally continuously updates a radar signal (30) generated by a radar as the traffic signal.

3. Method according to claim 2, **characterised in that** the further application (12)
- examines the individual radar signals (30) and detects means of transport (4), in particular aircraft or ships, in the radar signal (30), wherein the respective position of the means of transport (4) is determined in the form of coordinates assigned to the means of transport (4), and wherein the positions of the individual means of transport (4) are optionally set in relation to the respective digital image generated on the basis of the radar signal (30), and
- generates symbols (21) at the individual determined positions of the means of transport (4), which symbols are displayed superimposed on the radar signal (30) on the screen (5) or replace the radar signal.

4. Method according to claim 3, **characterised in that**, when one of the symbols is actuated with the pointing device (6), an additional function assigned to the respective symbol (21) or means of transport (4) is called up or terminated, wherein in particular a communication connection with the respective means of transport (4) is established or terminated.

5. Method according to any of the preceding claims, **characterised in that** the further application (12, 13) additionally has a number of operating elements which can be operated by means of a pointing device (6), in particular by means of a mouse or by means of a touchpad, and which cover the respective radar signal generated by the first application (11).

6. Method according to any of the preceding claims, **characterised in that** the at least one further application (12, 13) has operating elements which are superimposed on the first, optionally the further, application (11, 12, 13) and which in each case have transparent areas, such that the traffic signal (30) displayed by the first application (11) is partially visible and the first application (11) can be operated.

7. Method according to any of the preceding claims, **characterised in that**
- at least two further applications (12, 13) are present,
- a priority for the display of the applications (11, 12, 13) is predetermined, wherein the first application (11) has the lowest priority, and
- the content of an application (11, 12, 13) is displayed at a specific image position only when all applications (11, 12, 13) with a higher priority are transparent,
- wherein the priority of the further applications (12, 13) can optionally be set.

8. Method according to any of the preceding claims, **characterised in that** the first application (11) and the further applications (12, 13) are aligned at a reference point which is predetermined in particular by the position of the first application (11), and are set as invariable in terms of their shape, size and position.

9. Method according to any of the preceding claims, **characterised in that** the first application (11) is not in direct data connection with the further applications (12, 13) and, with the exception of execution on the same computer under the same operating system, no data exchange, in particular at least not with regard to traffic data and data derived therefrom, is carried out between the first application (11) and the further applications (12, 13).

10. Traffic management terminal (1) for displaying and processing safety-critical information for traffic management and control centres with at least one screen (5), and
a) an interface for feeding in a traffic signal (30) which provides the traffic signal (30) in particular as a sequence of successively recorded digital images, wherein
b) a first application (11) which processes the traffic signal (30) and displays it on a screen (5) is stored in an executable manner on the terminal (1), wherein the first application (11) occupies a predetermined screen area,
c) at least one further application (12, 13) is provided which has a user interface that has or occupies a screen area that is identical to or overlaps with the first application (11),
d) the further application (12, 13) is superimposed on the first application (11), such that the user interface of the further application (12, 13) covers the first application (11),
**characterised in that**
e) the further application (12, 13) is designed to be transparent in at least one image area of the screen area it occupies, such that the respective traffic signal (30) displayed by the first application (11) is displayed, wherein a graphical user interface of the first application (11) is displayed and can be operated.

11. Terminal according to claim 10, **characterised in that** the first application (11) displays and optionally continuously updates a radar signal (30) generated by a radar as the traffic signal.

12. Terminal according to claim 11, **characterised in that**
the further application (12)
- examines the individual radar signals (30) and detects means of transport (4), in particular aircraft or ships, in the radar signal (30), wherein the further application (12) determines the respective position of the means of transport (4) in the form of coordinates assigned to the means of transport (4) and optionally sets the positions of the individual means of transport (4) in relation to the respective digital image generated on the basis of the radar signal (30), and
- wherein the further application (12) generates symbols (21) at the individual determined positions of the means of transport (4), and displays said symbols superimposed on the radar signal (30) on the screen (5) and thus overwrites or overlayers the radar signal.

13. Terminal according to any of claims 10 to 12, **characterised by** a pointing device (6) which is implemented in particular by a mouse or a touchpad, wherein the user interfaces of the applications (11, 12, 13) have operating elements which can be operated with the pointing device.

14. Terminal according to any of claims 10 to 13, **characterised in that** the at least one further application (12, 13) has operating elements which are superimposed on the first, optionally the further, application (11, 12, 13) and which in each case have transparent areas, such that the traffic signal (30) displayed by the first application (11) is partially visible and the first application (11) can be operated.

15. Terminal according to any of claims 10 to 14, **characterised in that**
- at least two further applications (12, 13) are present,
- a priority for the display of the applications (11, 12, 13) is predetermined, wherein the first application (11) has the lowest priority, and
- the content of an application (11, 12, 13) is displayed at a specific image position only when all applications (11, 12, 13) with a higher priority are transparent,
- wherein the priority of the further applications (12, 13) can optionally be set.

16. Terminal according to any of claims 10 to 15, **characterised in that** the first application (11) and the further applications (12, 13) are aligned at a reference point which is predetermined in particular by the position of the first application (11), and are invariable in terms of their shape, size and position.

17. Terminal according to any of claims 10 to 16, **characterised in that** the first application (11) is not in direct data connection with the further applications (12, 13) and, with the exception of execution on the same computer under the same operating system, there is no data exchange, in particular at least not with regard to traffic data and data derived therefrom, between the first application (11) and the further applications (12, 13).

18. Data carrier on which a program for carrying out a method according to any of claims 1 to 9 is stored.

## Revendications

1. Procédé d'affichage et de préparation d'informations critiques pour la sécurité destinées à des postes de commande des opérations et de gestion de trafic munis d'au moins un écran (5), dans lequel
a) un signal de trafic (30) est mis à disposition, dans lequel le signal de trafic (30) est fourni sous la forme d'une séquence d'images numériques enregistrées de manière successive, et
b) le signal de trafic (30) est traité par une première application (11) et est affiché sur un écran (5), dans lequel la première application (11) occupe une région d'écran prédéfinie,
c) au moins une autre application (12, 13) est fournie, qui présente une interface utilisateur présentant ou occupant une région d'écran identique à la première application (11) ou chevauchant celle-ci, et
d) l'autre application (12, 13) est superposée à la première application (11) de sorte que l'interface utilisateur de l'autre application (12, 13) recouvre la première application (11), **caractérisé en ce que**
e) l'autre application (12, 13) est réalisée de manière transparente dans au moins une région d'image de la région d'écran qu'elle occupe, de sorte que le signal de trafic (30) respectif affiché par la première application (11) est affiché, dans lequel une interface utilisateur graphique de la première application (11) est affichée et peut être utilisée.

2. Procédé selon la revendication 1, **caractérisé en ce que**
- la première application (11) affiche sous la forme d'un signal de trafic un signal radar (30) généré par un radar et le met éventuellement à jour de manière continue.

3. Procédé selon la revendication 2, **caractérisé en ce que** l'autre application (12)
- examine les signaux radar (30) individuels et détecte des moyens de transport (4), en particulier des avions ou des navires, au sein du signal radar (30), dans lequel la position respective du moyen de transport (4) est déterminée sous la forme de coordonnées associées au moyen de transport (4), et dans lequel les positions des moyens de transport (4) individuels sont éventuellement établies par rapport à l'image numérique respective générée en se basant sur le signal radar (30), et
- crée des symboles (21), affichés sur l'écran (5) de manière superposée au signal radar (30) ou en remplacement du signal radar, au niveau des positions individuelles déterminées du moyen de transport (4).

4. Procédé selon la revendication 3, **caractérisé en ce que**, lors de l'actionnement de l'un des symboles avec le dispositif de pointage (6), une fonction supplémentaire associée au symbole (21) ou au moyen de transport (4) respectif est appelée ou interrompue, dans lequel en particulier une liaison de communication avec le moyen de transport (4) respectif est créée ou interrompue.

5. Procédé selon l'une quelconque des revendications précédentes, **caractérisé en ce que** l'autre application (12, 13) présente en outre un certain nombre d'éléments de commande pouvant être commandés au moyen d'un dispositif de pointage (6), en particulier au moyen d'une souris ou au moyen d'un pavé tactile, et qui recouvrent le signal radar respectif généré par la première application (11).

6. Procédé selon l'une quelconque des revendications précédentes, **caractérisé en ce que** la au moins une autre application (12, 13) dispose d'éléments de commande superposés à la première, éventuellement à l'autre, application (11, 12, 13) et présentant respectivement des régions transparentes de sorte que le signal de trafic (30) affiché par la première application (11) est partiellement visible et la première application (11) peut être utilisée.

7. Procédé selon l'une quelconque des revendications précédentes, **caractérisé en ce que**
- au moins deux autres applications (12, 13) sont disponibles,
- une priorité d'affichage des applications (11, 12, 13) est prédéfinie, dans lequel la première application (11) présente la priorité la plus basse, et
- le contenu d'une application (11, 12, 13) n'est affiché au niveau d'une position d'image déterminée que si toutes les applications (11, 12, 13) de priorité plus élevée sont transparentes,
- dans lequel la priorité des autres applications (12, 13) peut éventuellement être ajustée.

8. Procédé selon l'une quelconque des revendications précédentes, **caractérisé en ce que** la première application (11) et les autres applications (12, 13) sont alignées au niveau d'un point de référence prédéfini, en particulier grâce à la position de la première application (11), et sont immuables dans leur forme, leur taille et leur position.

9. Procédé selon l'une quelconque des revendications précédentes, **caractérisé en ce que** la première application (11) n'est pas en liaison de données directe avec les autres applications (12, 13) et, à l'exception de l'exécution sur le même ordinateur et sous le même système d'exploitation, aucun échange de données, en particulier du moins pas en ce qui concerne les données de trafic et les données qui en sont dérivées, n'est mis en œuvre entre la première application (11) et les autres applications (12, 13).

10. Terminal de gestion du trafic (1) permettant l'affichage et la préparation d'informations critiques pour la sécurité destinées à des postes de commande des opérations et de gestion de trafic munis d'au moins un écran (5), ainsi que
a) une interface permettant d'alimenter un signal de trafic (30) et qui fournit le signal de trafic (30) en particulier sous la forme d'une séquence d'images numériques enregistrées de manière successive, dans lequel
b) une première application (11) qui traite le signal de trafic (30) et l'affiche sur un écran (5) est stockée sur le terminal (1) de manière à pouvoir être exécutée, dans lequel la première application (11) occupe une région d'écran prédéfinie,
c) au moins une autre application (12, 13) est fournie, qui présente une interface utilisateur présentant ou occupant une région d'écran identique à celle de, ou chevauchant, la première application (11),
d) l'autre application (12, 13) est superposée à la première application (11) de sorte que l'interface utilisateur de l'autre application (12, 13) recouvre la première application (11), **caractérisé en ce que**
e) l'autre application (12, 13) est conçue transparente dans au moins une région d'image de la région d'écran qu'elle occupe, de sorte que le signal de trafic (30) respectif affiché par la première application (11) est affiché, dans lequel une interface utilisateur graphique de la première application (11) est affichée et peut être utilisée.

11. Terminal selon la revendication 10, **caractérisé en ce que** la première application (11) affiche sous la forme d'un signal de trafic un signal radar (30) généré par un radar et le met éventuellement à jour de manière continue.

12. Terminal selon la revendication 11, **caractérisé en ce que**
l'autre application (12)
- examine les signaux radar (30) individuels et détecte des moyens de transport (4), en particulier des avions ou des navires, au sein du signal radar (30), dans lequel l'autre application (12) détermine la position respective du moyen de transport (4) sous la forme de coordonnées associées au moyen de transport (4) et établit les positions des moyens de transport (4) individuels éventuellement par rapport à l'image numérique respective générée en se basant sur le signal radar (30), et
- dans lequel l'autre application (12) crée des symboles (21) au niveau des positions individuelles déterminées des moyens de transport (4), les affiche sur l'écran (5) de manière superposée au signal radar (30) et écrase ou se superpose ainsi au signal radar.

13. Terminal selon l'une quelconque des revendications 10 à 12, **caractérisé par** un dispositif de pointage (6), en particulier sous la forme d'une souris ou d'un pavé tactile, dans lequel les interfaces utilisateur des applications (11, 12, 13) présentent des éléments de commande qui peuvent être actionnés grâce au dispositif de pointage.

14. Terminal selon l'une quelconque des revendications 10 à 13, **caractérisé en ce que** la au moins une autre application (12, 13) dispose d'éléments de commande superposés à la première, éventuellement à l'autre, application (11, 12, 13) et présentant respectivement des régions transparentes de sorte que le signal de trafic (30) affiché par la première application (11) est partiellement visible et la première application (11) peut être utilisée.

15. Terminal selon l'une quelconque des revendications 10 à 14, **caractérisé en ce que**
- au moins deux autres applications (12, 13) sont disponibles,
- une priorité d'affichage des applications (11, 12, 13) est prédéfinie, dans lequel la première application (11) présente la priorité la plus basse, et
- le contenu d'une application (11, 12, 13) n'est affiché au niveau d'une position d'image déterminée que si toutes les applications (11, 12, 13) de priorité plus élevée sont transparentes,
- dans lequel la priorité des autres applications (12, 13) peut éventuellement être ajustée.

16. Terminal selon l'une quelconque des revendications 10 à 15, **caractérisé en ce que** la première application (11) et les autres applications (12, 13) sont alignées au niveau d'un point de référence prédéfini, en particulier grâce à la position de la première application (11), et sont immuables dans leur forme, leur taille et leur position.

17. Terminal selon l'une quelconque des revendications 10 à 16, **caractérisé en ce que** la première application (11) n'est pas en liaison de données directe avec les autres applications (12, 13) et, à l'exception de l'exécution sur le même ordinateur et sous le même système d'exploitation, aucun échange de données, en particulier du moins pas en ce qui concerne les données de trafic et les données qui en sont dérivées, n'a lieu entre la première application (11) et les autres applications (12, 13).

18. Support de données sur lequel est stocké un programme permettant la mise en œuvre d'un procédé selon l'une quelconque des revendications 1 à 9.
